# EUROPÄISCHE PATENTANMELDUNG

(11) **EP 4 470 766 A1**
(43) Veröffentlichungstag der Anmeldung: **04.12.2024**
(21) Anmeldenummer: 23177080.1
(22) Anmeldetag: 02.06.2023
(51) Int. Cl.: B32B 5/18, B32B 3/06, B32B 3/08, B32B 5/02, B32B 5/24, B32B 7/027, B32B 7/12

(54) **RECYCLINGFÄHIGE FLUGZEUGKABINENBAUTEILE**

(71) Anmelder: Airbus Operations GmbH, 21129 Hamburg (DE)
(72) Erfinder: Witte, Tassilo, 21129 Hamburg (DE); Büttemeyer, Holger, 21129 Hamburg (DE); Müller, Lisa, 21129 Hamburg (DE); Spitzer, Albrecht, 21129 Hamburg (DE); Warner, Holger, 21129 Hamburg (DE)

(57) **Zusammenfassung**

Herstellverfahren für Flugzeug-Sandwich-Bauteile umfassend einen thermoplastischen Schaumkern, eine obere und eine untere faserverstärkte Deckschicht aus thermoplastischem Material, wobei die Materialien in einer temperierten Presse miteinander verbunden werden.

## Beschreibung

Die Erfindung betrifft ein Herstellverfahren für Flugzeugkomponenten, insbesondere für Flugzeugkabinen-Komponenten wie Kabinenseitenwände, Druckausgleichspanele, Küchenbauteile, Deckenverkleidungen, Bordtoilettenbände, Fußbodenplatten und ähnliches.

Bislang werden derartige Flugzeugkomponenten aus mit Phenol-Formaldehyd-Harzen getränkten Papierwabenkernen, die Deckschichten aus mit Phenol-Formaldehyd-Harzen imprägniertnen Glasfasern hergestellt. Halter werden separat im Spritzguss hergestellt und mit zusätzlichen Befestigungsmitteln beispielsweise Nieten befestigt. Die finale Oberflächenbearbeitung solcher Bauteile erfolgt durch Spachteln und Schleifen. Ist eine Dekorierung solcher Flugzeugbauteile gewünscht, so wird zusätzlich eine Mehrschichtfolie verwendet, die bedruckt oder bedruckbar sein kann. Dies kann beispielsweise im Offsetdruck erfolgen.

Solche Bauteile sind nur schlecht in den Wertstoffkreislauf einzuspeisen, da sie aus einem Materialmix bestehen, also vor einer werkstofflichen Weiterverwertung nach Materialtypen getrennt werden müssen. Darüber hinaus ist der Aufwand bei ihrer Herstellung hoch, was sich in ihrem Preis niederschlägt.

Davon ausgehend stellte sich die Aufgabe, solche Flugzeugbauteile recyclingfähig zu gestalten und den Aufwand bei Herstellung und Einbaus zu verringern.

Eine Lösung der Aufgabe ist ein Herstellverfahren für Flugzeug-Sandwich-Bauteile umfassend einen thermoplastischen Schaumkern, eine obere und eine untere faserverstärkte Deckschicht aus thermoplastischem Material, wobei die Materialien in einer temperierten Presse miteinander verbunden werden. Erfindungsgemäß hergestellte Materialien haben den Vorteil, dass sie frei von Phenolharzen hergestellt werden können, was unter Umwelt- und Arbeitsschutzgesichtspunkten von großen Vorteil ist. Darüber hinaus sind solche Materialien schweißbar, so dass Fügeprozesse ohne Verwendung zusätzlicher Befestigungsmittel durchgeführt werden können. Die Verbesserung der Oberflächenqualität durch Spachteln und Schleifen kann entfallen. Es sind auch Möglichkeiten der Dekoration solcher Flugzeugbauteile möglich, die zuvor nicht denkbar waren. Weiterhin ist es von Vorteil, dass der Herstellprozess automatisierbar ist und kontinuierlich durchgeführt werden kann. Dabei ist es bevorzugt, wenn der Schaum aus PESU besteht. Auch PESU, PPSU, PVDF, PC, und/oder flammgeschütztes PET können dafür verwendet werden. Dabei ist es bevorzugt, wenn die Deckschichten aus faserverstärktem PEI, PESU, PC, PPS, besonders bevorzugt aus PEI, PESU bestehen. Faserverstärkungen können aus Glasfasern, Basaltfasern, Naturfasern z.B. Flachs, und/oder Kohlenstofffasern, insbesondere rezyklierten Kohlenstofffasern bestehen.

Dabei ist es bevorzugt, wenn Teilbereiche des Bauteils massiv aus dem Material der Deckschichten ausgeführt sind. Dabei ist es bevorzugt, wenn die Presse diskontinuierlich betrieben wird. Dabei ist es besonders bevorzugt, wenn die Presse eine Doppelbandpresse ist. Dabei ist es bevorzugt, wenn in einem ersten Schritt der Schaum zugeschnitten wird, in einem zweiten Schritt der Schaum mit Deckschichten belegt wird, in einem dritten Schritt die Deckschichten auf die Glastemperatur oder eine Temperatur nahe der Glastemperatur aufgeheizt werden, und in einem weiteren Schritt die Materialien in einer Presse geformt werden, wobei die Presse unterhalb der Aufheiztemperatur betrieben wird. Bei all dem ist es bevorzugt, wenn entweder zwischen den Deckschichten und dem Schaumkern eine Schicht aus einem Adhäsion vermittelnden Material vorgesehen ist oder zwischen den Deckschichten und dem Schaumkern keine weitere Schicht aus einem anderen Material vorgesehen ist. Dabei ist es bevorzugt, wenn Anbauteile, Einsätze, Halter mittels thermoplastischer Schweißverfahren oder während des Formprozesses mit dem Sandwich-Bauteil verbunden werden. Weiter ist bevorzugt, wenn dekorative Elemente in das Material der Deckschicht eingebettet sind. Dies kann etwa eine Farbschicht sein. Dadurch kann auf eine zusätzliche Dekorschicht verzichtet werden. Weiter ist es bevorzugt, wenn dekorative Elemente durch eine zusätzliche Schicht des gleichen Materials wie das vorwiegend im Bauteil verwendete Material auf das Bauteil aufgebracht werden. Insbesondere ist von Vorteil, wenn es sich dabei um den gleichen Polymertyp handelt. Mit Polymertyp sind Materialien gemeint, die aus den gleichen Monomeren hergestellt werden können, die sich aber beispielsweise hinsichtlich der Kettenlänge, Verzweigung, Monomerverteilung, Polydispersität, Kristallinität unterscheiden. Weiter ist es bevorzugt, wenn abgesehen von Verstärkungsfasern die Dekorationsschicht, Kernschicht , Deckschichten, Schichten aus einem Adhäsion vermittelnden Material sämtlich aus dem gleichen Polymertyp bestehen. Die führt zu einer besseren Recyclimngfähigkeit der Bauteile.

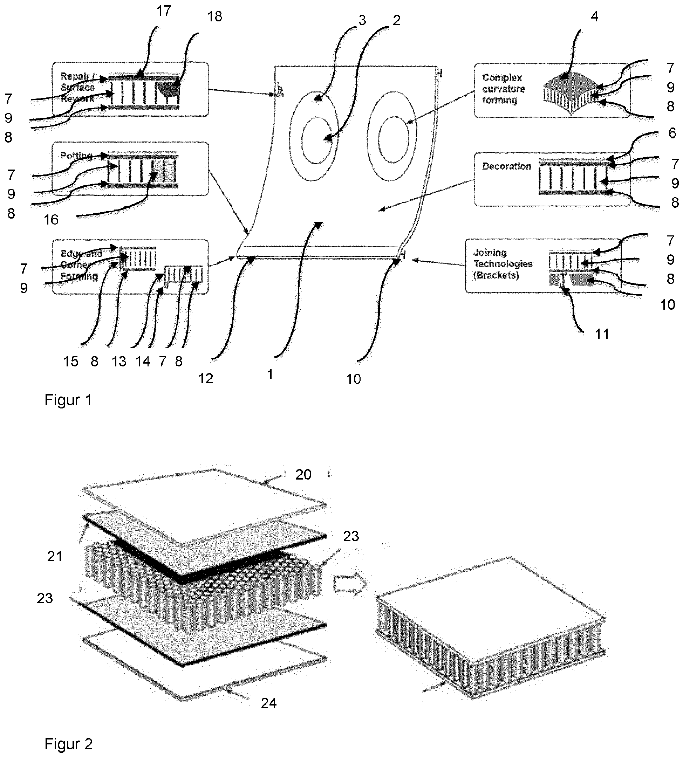

Figur 1 zeigt beispielhaft eine Flugzeugseitenwand. Das Seitenwandpanel (1) ist auf der Innenseite des Rumpfes angeordnet und umfasst eine Aussparung für ein Fenster (2) sowie eine Fensterrahmenblende (3). Das eigentliche Fenster und der eigentliche Fensterrahmen sind Teil der Rumpfschale, die von innerhalb des Flugzeuges im Regelfall nicht sichtbar ist. Im Bereich der Fensterrahmenblende (3) ist es erforderlich, eine komplexe Oberflächengeometrie zu erzeugen. Dazu muss dieser Bereich (4), der eine obere Deckschicht (7) und eine untere Deckschicht (8) sowie einen Kern (9) umfasst, gewölbt ausgeführt werden. Dies ist durch das erfindungsgemäße Verfahren möglich, ohne dass der Schaumkern unnötig deformiert, geschwächt oder zusammengeschmolzen wird. Weiter umfasst das Panel (1) eine für den Fluggast sichtbare Oberflächengestaltung (6), die oberhalb der oberen Deckschicht (7) aufgebracht wird. Eine solche Deckschicht kann bedruckt sein oder sie kann so hergestellt werden, dass sie anschließend - also nach dem Verbinden mit der Deckschicht (7) - so erhalten wird, dass sie anschließend dekoriert werden kann, zum Beispiel durch Sprühen, Bemalen oder ein anderes Oberflächendekorationsverfahren. Weiterhin ist es möglich, auf der Oberfläche des Bauteils Verbindungselemente (10) anzubringen. Solche Verbindungselemente können Halter oder Winkel sein. Dazu wird ein metallisches oder aus einem anderen Material wie zum Beispiel Kunststoff bestehendes Verbindungselement (10) mit einem einbettenden Material (11) umgeben und so auf der unteren Deckschicht (8) fixiert. Eine weitere Ausführungsform der Erfindung beinhaltet die Herstellung von Kantenabschlüssen (12). Dazu kann entweder ein Teil der oberen Deckschicht (7) und der unteren Deckschicht (8) so bemessen sein, dass sie in Form eines an den Kantenabschluss anschließenden Falzes (14) aufeinander zu liegen kommen und miteinander verbunden werden. Eine weitere Möglichkeit ist es, die obere Deckschicht (7) und die untere Deckschicht (8) zunächst um die Stärke der Kernschicht (9) die Kernschicht überlappend vorzusehen und diese überstehenden Bereiche dann jeweils zur Kante hin umzuformen, um eine Doppelschicht (15) als Kantenabschluss zu bilden. Eine weitere Ausführungsform umfasst das Verfüllen der Kernschicht (9) mit Füllmaterial (16). Dazu wird zwischen der oberen Deckschicht (7) und der unteren Deckschicht (8) ein Teil des Kerns durch Füllmaterial (16) ersetzt. Dies ist hilfreich, um die Druckfestigkeit an einzelnen Bereichen des Verbundmaterials zu erhöhen. Schließlich ist es möglich, Reparaturstellen besonders elegant zu bearbeiten. Dazu wird schadhaftes Material in einer Deckschicht (7) entfernt, durch verstärkungsfasern enthaltendes Reparaturmaterial (17) ersetzt und anschließend durch thermoplastisches Fügen miteinander verbunden. Ebenso ist es möglich, einen beschädigten Bereich des Kerns (9) zu entfernen und durch Reparaturmaterial (18) in Form von thermoplastischem Schaum zu ersetzen und thermoplastisch zu verbinden.

Figur 2 zeigt einen Verbund gemäß Stand der Technik. Auf einen Wabenkern (22), der üblicherweise aus mit Phenolharz imprägniertem Papier besteht, werden eine obere und untere Deckschicht (20) und (24) aufgebracht unter denen jeweils in Richtung des Wabenkerns eine Klebeschicht (21) und (23) angeordnet ist. Das Ganze wird durch Heißpressen miteinander verbunden, um einen ebenen Wabenkern Sandwichverbund herzustellen. Wünscht man Verbindungselemente an einem solchen Strukturelement so werden diese durch Spritzgießen hergestellt und durch Schrauben, Nieten oder vergleichbare Verbindungstechniken mit dem Kern verbunden. Ein mögliches Oberflächenfinish kann erhalten werden, indem man zusätzlich eine thermoplastische Mehrschichtfolie aufbringt und diese zuvor im Offsetdruck gestaltet.

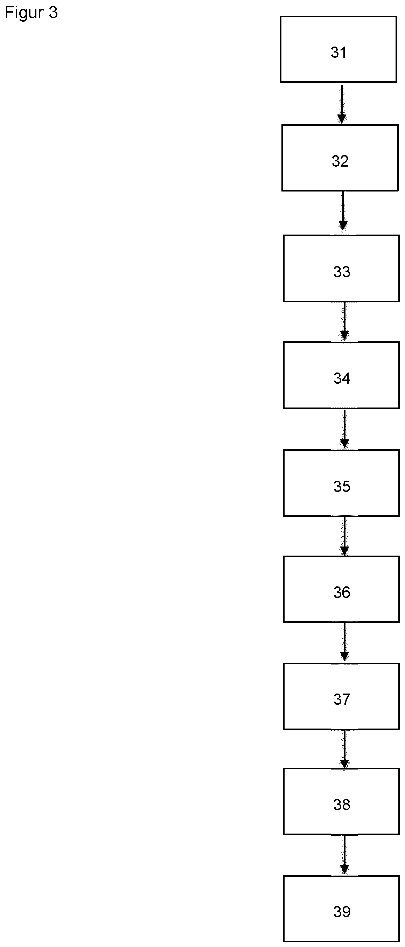

Figur 3 zeigt ein Prozess zur Herstellung erfindungsgemäße Kabinenbauteile. In Schritt (31) wird zunächst das Rohmaterial inspiziert. Im anschließenden Schritt (32) wird das Rohmaterial zugeschnitten und in Schritt (33) vorgeformt und arrangiert. In Schritt (34) werden die Deckschichten thermisch auf die Prozessstemperatur aufgeheizt. Dies kann durch Infrarotbeleuchtung, eine beheizte Presse oder gleichartige Verfahren erfolgen. Vorteilhaft ist es, wenn die Herstellung des Sandwich durch Heißpressen erfolgt. Der Schaum kann dabei bis zu 15 Vol.% komprimiert werden. Dies kann besonders vorteilhaft durch einen Abstandsrahmen zur Erzielung der Zieldicke erfolgen. Dies führt zum Aufheizen des gesamten Sandwichsystems bestehend aus Decklagen und Schaumkern (z.B. durch Konduktion im Aufheizwerkzeug). Alternativ können die einzelnen Komponenten aufgeheizt werden, z.B. durch Infrarotheizung und in die formgebende Presse transferiert werden. Beim Einsatz von PEI erfolgt das Pressen bei 218 °C bis 222 °C, bei Einsatz von PESU 210 °C bis 215 °C, bei Einsatz von PC bei 210 °C bis 215 °C, Dabei darf die Glastemperatur des Schaums nicht überschritten werden. (225°C bei PESU-Schaum)

Anschließend wird in Schritt (35) in einer Presse, die aus Ober- und Unterwerkzeug besteht, das Material bei 220-240°C konsolidiert und geformt. Vorteilhaft wird das Sandwichmaterial in diese Presse transferiert. Es können ebene oder gekrümmte Bauteile erzeugt werden. Im folgenden Schritt (36) wird das Material durch Schleifen, Schneiden oder Fräsen abgelängt bzw. auf Maß gebracht. Im anschließenden Schritt (37) wird die Oberfläche gestaltet. Dies kann z.B durch Aufbringen einer thermoplastischen, bedruckten Folie erfolgen. Alternativ kann eine konventionelle Dekorfolie verwendet oder das Panel pulverbeschichtet werden. Im folgenden Schritt (38) können Verstärkungen und Inserts eingebracht und konsolidiert werden. Abschließend wird in Schritt (39) die Struktur mit weiteren Anbauteilen zusammengesetzt.

### Bezugszeichenliste

| | |
|---|---|
| 1 | Seitenwandpanel |
| 2 | Fenster |
| 3 | Fensterrahmen |
| 4 | Bereich mit komplexer Oberflächengeometrie |
| 6 | Oberflächengestaltung |
| 7 | obere Deckschicht 7 |
| 8 | untere Deckschicht 8 |
| 9 | Kern, Kernschicht |
| 10 | Verbindungselement(e) |
| 11 | einbettendes Material |
| 12 | Kantenabschluss |
| 14 | Falze |
| 15 | Doppelschicht |
| 16 | Füllmaterial |
| 17 | Reparaturmaterial |
| 18 | Reparaturmaterial |
| 20 | obere Deckschicht |
| 21 | obere Klebeschicht |
| 22 | Waben kern |
| 23 | untere Klebeschicht |
| 24 | untere Deckschicht |
| 31-39 | Prozessschritte |

## Patentansprüche

1. Herstellverfahren für Flugzeug-Sandwich-Bauteile umfassend einen thermoplastischen Schaumkern, eine obere und eine untere faserverstärkte Deckschicht aus thermoplastischem Material, wobei die Materialien in einer temperierten Presse miteinander verbunden werden.

2. Verfahren nach Anspruch 1 **dadurch gekennzeichnet, dass** der Schaum aus PESU besteht.

3. Verfahren nach Anspruch 1 oder 2 **dadurch gekennzeichnet, dass** die Deckschichten aus faserverstärktem PEI oder faserverstärkten PESU bestehen.

4. Verfahren nach einem der vorangehenden Ansprüche **dadurch gekennzeichnet, dass** Teilbereiche des Bauteils massiv aus dem Material der Deckschichten ausgeführt sind.

5. Verfahren nach einem der vorangehenden Ansprüche **dadurch gekennzeichnet, dass** die Presse diskontinuierlich betrieben wird.

6. Verfahren nach einem der vorangehenden Ansprüche **dadurch gekennzeichnet, dass** die Presse eine Doppelbandpresse ist.

7. Verfahren nach Anspruch 6 **dadurch gekennzeichnet dass**
in einem ersten Schritt der Schaum zugeschnitten wird,
in einem zweiten Schritt der Schaum mit Deckschichten belegt wird,
in einem dritten Schritt die Deckschichten auf die Glastemperatur oder eine Temperatur nahe der Glastemperatur aufgeheizt werden, und
in einem weiteren Schritt die Materialien in einer Presse geformt werden, wobei die Presse unterhalb der Aufheiztemperatur betrieben wird.

8. Verfahren nach einem der vorangehenden Ansprüche **dadurch gekennzeichnet, dass** zwischen den Deckschichten und dem Schaumkern eine Schicht aus einem Adhäsion vermittelnden Material vorgesehen ist.

9. Verfahren nach einem der Ansprüche 1 bis 7 **dadurch gekennzeichnet, dass** zwischen den Deckschichten und dem Schaumkern keine weitere Schicht aus einem anderen Material vorgesehen ist.

10. Verfahren nach einem der vorangehenden Ansprüche **dadurch gekennzeichnet, dass** Anbauteile, Einsätze, Halter mittels thermoplastischer Schweißverfahren oder während des Formprozesses mit dem Sandwich-Bauteil verbunden werden.

11. Verfahren nach einem der vorangehenden Ansprüche **dadurch gekennzeichnet, dass** dekorative Elemente in das Material der Deckschicht eingebettet sind.

12. Verfahren nach einem der vorangehenden Ansprüche **dadurch gekennzeichnet, dass** dekorative Elemente durch eine zusätzliche Schicht des gleichen Materials wie das vorwiegend im Bauteil verwendete Material auf das Bauteil aufgebracht werden.

13. Verfahren nach einem der vorangehenden Ansprüche **dadurch gekennzeichnet, dass** alle Anbauteile aus dem gleichen Material wie die Deckschichten bestehen.

14. Verfahren nach einem der vorangehenden Ansprüche **dadurch gekennzeichnet, dass** abgesehen von Verstärkungsfasern die Dekorationsschicht, Kernschicht , Deckschichten, Schichten aus einem Adhäsion vermittelnden Material sämtlich aus dem gleichen Polymertyp bestehen.
